# EUROPÄISCHE PATENTSCHRIFT

(11) **EP 0 449 234 B1**
(45) Veröffentlichungstag und Bekanntmachung des Hinweises auf die Patenterteilung: **28.12.1994**
(21) Anmeldenummer: 91104812.2
(22) Anmeldetag: 26.03.1991
(51) Int. Cl.: C04B 22/02, C04B 22/04, C04B 20/12, C04B 38/02

(54) **Verfahren zur Porenbildung in Mörtel**
Process for pore formation in mortar
Procédé de formation de pores dans les mortiers

(30) Priorität: 28.03.1990 DE 4009967
(43) Veröffentlichungstag der Anmeldung: 02.10.1991
(73) Patentinhaber: Mansfeld, Lothar, D-21502 Geesthacht (DE); Kock, Heinz, D-21514 Klein Pampau (DE)
(72) Erfinder: Mansfeld, Lothar, D-21502 Geesthacht (DE)
(74) Vertreter: Glawe, Delfs, Moll & Partner

(56) Entgegenhaltungen:
- EP-A- 0 061 638
- FR-A- 1 420 953
- GB-A- 11 942
- GB-A- 299 484
- GB-A- 656 030
- US-A- 1 802 667
- US-A- 4 332 619
- CHEMICAL ABSTRACTS, vol. 105, no. 14, 6. Oktober 1986, Columbus, Ohio, US;abstract no. 119766F, & JP-A-6 177 684

## Beschreibung

Die Erfindung betrifft ein Verfahren zur Porenbildung in Mörtel durch Beimischung eines Pulvers eines durch chemische Reaktion mit einer anderen Mörtelkomponente gasbildenden Stoffs. Beispielsweise ist es bekannt, Quell- oder Treibmörtel sowie bei der Herstellung von Porenbeton Pulver von Aluminium, Silicium oder Calciumcarbit beizumischen, die mit den im Mörtel enthaltenen Wasser, insbesondere wenn dies basisch ist, reagieren und ein Gas freisetzen, das die gewünschten Poren bildet. Bei den bisher bekannten Quellmitteln, Treibmitteln oder Gasbildnern beginnt die Reaktion unverzüglich nach Anmischen des Mörtels. Dies ist nachteilig, weil der Mörtel rasch verarbeitet werden muß und weil dies manche Anwendungen (beispielsweise die Herstellung von Ort-Gasbeton) sowie die Erzielung zuverlässiger Mörtel- oder Betoneigenschaften, die auf einer definierten Gasbildung beruhen, ausschließt oder erschwert.

Der Erfindung liegt die Aufgabe zugrunde, ein Verfahren zur Porenbildung in Mörtel zu schaffen, das diese Nachteile nicht aufweist.

Die erfindungsgemäße Lösung besteht darin, daß die Pulverpartikeln vor der Mischung mit dem Mörtel mit einer sie gegenüber ihrem Reaktionspartner im Mörtel zeitweilig inaktivierenden Oberflächenschicht versehen werden.

Die inaktivierende Oberflächenschicht verhütet oder hemmt während einer gewissen Zeitspanne den Zutritt des flüssigen Reaktionspartners zu dem reaktionsfähigen Teil der Partikel und verhindert oder verlangsamt dadurch während dieser Zeitdauer die Gasbildung. Dies gibt Gelegenheit, den Mörtel in die gewünschte Form zu bringen, bevor die Porenbildung beginnt. Diese Zeitdauer kann durch die Art und die Dicke der Inaktivierungsschicht unter Berücksichtigung der Art des Reaktionspartners im Mörtel gezielt eingestellt werden.

Wichtige Gasbildner sind in der Praxis Metalle, insbesondere Aluminium und metallähnliche Stoffe wie Silicium, die die Eigenschaft haben, daß sie recht stabile Oxide bilden. Nach der Erfindung werden diese Stoffe zur Bildung der inaktivierenden Oberflächenschicht einem Oxidationsmittel ausgesetzt. Die Einwirkungsbedingungen (insb. Konzentration, Einwirkungsdauer und Temperatur) des Oxidationsmittels werden entsprechend dem gewünschten Inaktivierungsgrad gewählt. Man erhält so ein Gasbildungspulver mit definierten Inaktivierungseigenschaften, die in Verbindung mit bestimmten Mörteln bestimmte Verzögerungszeiten bei der Gasbildung ergeben. Als Oxidationsmittel kann auch gasförmiger Sauerstoff angewendet werden. Verwendet werden kann atmophärischer Sauerstoff oder auch eine sauerstoffangereicherte Atmosphäre oder reiner Sauerstoff ggf. bei erhöhter Temperatur unterhalb der Sintertemperatur des Metalls, vorzugsweise über 400°C. Der Sauerstoff kann aktiviert werden, beispielsweise durch Bestrahlung mit UV-Licht von etwa 240 nm Wellenlänge.

Die gezielte Oxidation hat sich als besonders wirksam und gut steuerbar erwiesen. Das gilt insbesondere bei der Verwendung von Silicium oder eines Silicids, insbesondere Ferrosilicium, als gasbildende Substanz. Sogar bei extrem alkalischen Mörteln, beispielsweise Wasserglasmörtel, lassen sich bei diesen Stoffen durch gezielte Oxidation vorbestimmte Ruhezeiten vor Beginn der Gasbildung zwischen einigen Minuten und einigen Stunden gezielt darstellen.

Damit der erzielte Oxidationsgrad (Dicke und Dichte der Oxidationsschicht) bei oxidationsempfindlichen Stoffen nicht nachträglich durch die Einwirkung der Atmosphäre verändert wird kann es zweckmäßig sein, die behandelten Pulverpartikeln vor dem oxidierenden Einfluß der Atmosphäre zu schützen, indem das Pulver beispielsweise unter Schutzgasatmosphäre oder unter Vakuum verpackt wird oder die Pulverpartikeln mit einem Schutzfilm versehen werden. Vorzugsweise werden solche Substanzen zur Bildung des Schutzfilms verwendet, die zum "Kriechen" neigen, d.h. die Eigenschaft aufweisen, sich auf der zugänglichen Oberfläche in extrem geringer Schichtdicke auszubreiten, und die dadurch einerseits selbst bei fehlender oder unvollkommener Mischung mit dem Pulver den gewünschten Schutzeffekt ergeben und anderseits nur in sehr geringer, die Mörteleigenschaften nicht störender Menge benötigt werden. Sie werden zweckmäßigerweise von einem leicht verseifbaren Öl, Fett, Harz oder Wachs gebildet, damit sie im basischen Mörtel aufgelöst werden können. Ferner können auch für diesen Zweck die oben bereits in anderem Zusammenhang erwähnten filmbildenden Stoffe wie Zelluloseaether, Polysaccharide sowie wasserlösliche und/oder alkaliunbeständige Polymere verwendet werden. Die Schutzschicht kann nach der Erfindung einen sauerstoffbindenden Zusatz enthalten, um die Sauerstoffeinwirkung auf die Partikeln weiter zu verringern.

In Ausnahmefällen kann es vorkommen, daß ein Material von Haus aus infolge der Art seiner Gewinnung oder aufgrund langzeitiger Lagerung unter ungünstigen Umständen so stark oxidiert ist, daß es zu inaktiv ist oder seine Aktivität zu ungleichmäßig ist, um für die gezielte Einstellung der Gasbildungsverzögerung geeignet zu sein. Erfindungsgemäß wird in diesen Fällen eine Beseitigung der Oxidationsschicht durch Reduktion oder Salzbildung vorgesehen, vorzugsweise durch Fluoridierung durch Einwirkung von Flußsäure. Diese Fluoridierung kann in vielen Fällen so gezielt durchgeführt werden, daß wiederum eine gewünschte, geringere Verzögerungszeit bei der Gasbildung erreicht wird oder daß die Oxidationsschicht vollständig beseitigt oder auf ein solches Maß verringert wird, daß anschließend durch Oxidation oder auf andere Weise eine Schutzschicht mit berechenbarer Verzögerungszeit erzeugt werden kann.

Das Verhalten des gasbildenden Stoffs im Mörtel ist auch von der Größe seiner spezifischen Oberfläche abhängig und damit von seiner Partikelgröße. Auch die Verzögerungszeit kann davon beeinflußt sein. Dies ist bei den Inaktivierungsmaßnahmen zu berücksichtigen.

Die Erfindung verlangt nicht, daß die gasbildende Substanz in jedem Falle einer chemischen oder physikalischen Behandlung unterworfen wird. Vielmehr kann in Ausnahmefällen auch ein vorgefundener Oxidationsgrad eines als Gasbildner zu verwendenden Stoffs festgestellt und einer bestimmten Verzögerungszeit bei gegebenen Mörteln zugeordnet werden. Auch in einem solchen Fall wird der Erfindungsgedanke genutzt, das Vorhandensein einer Schutzschicht auf den Partikeln des gasbildenden Stoffs gezielt für die Gasbildungsverzögerung einzusetzen.

Wenn im vorliegenden Zusammenhang von Pulver gesprochen wird, so soll damit nicht zum Ausdruck gebracht werden, daß der gasbildende Stoff eine bestimmte Feinheit aufweisen muß; die gewünschte Partikelgröße richtet sich vielmehr nach den gewünschten Eigenschaften der Gasbildungsreaktion und der gewünschten Porenfeinheit.

In den folgenden Beispielen wird jeweils an erster Stelle die Art der gasbildenden Substanz, dann unter a) deren Verzögerungszeit in einem angegebenen Mörtel im unbehandelten Zustand der Substanz angegeben. Unter b) wird jeweils das Behandlungsverfahren und die damit erzielbare Verzögerungszeit angegeben.

### Beispiel 1:

Silicium, Feinheit: <0,15 mm
a) Reaktionsbeginn in Polymerwasserglasmörtel
   "unbehandelt": ca. 5 Minuten
b) Behandlungsverfahren - Mischungsansatz
   6 g Silicium
   4 g Wasserstoffperoxid H₂O₂, 7%ig
   Einwirkdauer: ca. 15 Minuten bei ca. 20°C
   Trocknung bei Temperatur >100°C
   Reaktionsbeginn in Polymerwasserglasmörtel
   "behandelt": ca. 20 Minuten

### Beispiel 2:

Ferrosilicium (79% Si, 21% Fe), Feinheit: <0,1 mm
a) Reaktionsbeginn in Polymerwasserglasmörtel
   "unbehandelt": ca. 7 Minuten
b) Behandlungsverfahren - Mischungsansatz
   6 g Ferrosilicium
   4 g Wasserstoffperoxid H₂O₂, 7%ig
   Einwirkdauer: ca. 15 Minuten bei ca. 20°C
   Trocknung bei Temperatur >100°C
   Reaktionsbeginn in Polymerwasserglasmörtel
   "behandelt": ca. 40 Minuten

### Beispiel 3:

Aluminium, Feinheit: spez. Oberfläche (Blaine) ca. 10000 cm²
a) Reaktionsbeginn in Zementmörtel
   "unbehandelt": ca. 3 Minuten
b) Behandlungsverfahren - Mischungsansatz
   5 g Aluminium
   20 g Wasserstoffperoxid H₂O₂, 10%ig
   Einwirkdauer: ca. 20 Minuten bei ca. 20°C
   Trocknung bei Temperatur >100°C
   Reaktionsbeginn in Zementmörtel
   "behandelt": ca. 10 Minuten

### Beispiel 4:

Ferrosilicium (79% Si, 21% Fe), Feinheit: <0,1 mm
a) Reaktionsbeginn in Polymerwasserglasmörtel
   "unbehandelt": ca. 7 Minuten
b) Behandlungsverfahren - Mischungsansatz
   6 g Ferrosilicium
   4 g KMnO₄-Lösung, Konzentration: *⁾%ig
   Einwirkdauer: ca. 15 Minuten bei ca. 20°C
   Trocknung bei Temperatur >100°C
   Reaktionsbeginn in Polymerwasserglasmörtel
   nach der Behandlung mit
   1.) 0,25%iger*⁾ KMnO₄-Lösung: ca. 50 Minuten
   2.) 0,50%iger*⁾ KMnO₄-Lösung: ca. 70 Minuten
   3.) 1,00%iger^{*)} KMnO₄-Lösung: ca. 135 Minuten

### Beispiel 5:

Ferrosilicium (79% Si, 21% Fe), Feinheit: <0,1 mm
a) Reaktionsbeginn in Polymerwasserglasmörtel
   "unbehandelt": ca. 7 Minuten
b) Behandlungsverfahren - Temperaturbehandlung
   Erhitzung des Ferrosiliciums auf 400°C
   Aufheizgeschwindigkeit: 150°C/h
   Reaktionsbeginn in Polymerwasserglasmörtel
   "behandelt": ca. 30 Minuten

### Beispiel 6:

Ferrosilicium (79% Si, 21% Fe), Feinheit: <0,1 mm
a) Reaktionsbeginn in Polymerwasserglasmörtel
   "unbehandelt": ca. 7 Minuten
b) Behandlungsverfahren - Mischungsansatz
   6 g Ferrosilicium
   4 g Flußsäure HF, 2%ig
   Einwirkdauer: ca. 15 Minuten bei ca. 20°C
   Trocknung bei Temperatur >100°C
   Reaktionsbeginn in Polymerwasserglasmörtel
   "behandelt": sofort

### Beispiel 7:

Ferrosilicium (79% Si, 21% Fe), Feinheit: <0,1 mm
a) Reaktionsbeginn in Polymerwasserglasmörtel
   "unbehandelt": >100 Minuten
b) Behandlungsverfahren - Mischungsansatz
   6 g Ferrosilicium
   4 g Flußsäure HF, 2%ig
   Einwirkdauer: ca. 15 Minuten bei ca. 20°C
   Trocknung bei Temperatur >100°C
   Reaktionsbeginn in Polymerwasserglasmörtel
   "behandelt": ca. 40 Minuten

## Patentansprüche

1. Verfahren zur Porenbildung in Mörtel durch Beimischung eines Pulvers eines durch chemische Reaktion mit einer anderen Mörtelkomponente gasbildenden, pulverförmigen Stoffs, der ein Metall oder Silicium umfaßt, dadurch gekennzeichnet, daß die Pulverpartikeln vor der Mischung mit dem Mörtel mit einer sie gegenüber ihrem Reaktionspartner im Mörtel zeitweilig inaktivierenden Oxidschicht versehen werden.

2. Verfahren nach Anspruch 1, dadurch gekennzeichnet, daß der gasbildende Stoff zur Bildung der inaktivierenden Oxidschicht einem Oxidationsmittel ausgesetzt wird.

3. Verfahren nach Anspruch 2, dadurch gekennzeichnet, daß die Konzentration und/oder Einwirkungsdauer des Oxidationsmittels entsprechend der gewünschten Inaktivierungsdauer und Mörtelart gewählt wird.

4. Verfahren nach Anspruch 1, dadurch gekennzeichnet, daß das Pulver einer sauerstoffhaltigen Atmosphäre bei erhöhter Temperatur ausgesetzt wird.

5. Verfahren nach Anspruch 1 oder 4, dadurch gekennzeichnet, daß das Pulver einer sauerstoffhaltigen Atmosphäre mit durch Bestrahlung aktiviertem Sauerstoff ausgesetzt wird.

6. Verfahren nach einem der Ansprüche 1 bis 5, dadurch gekennzeichnet, daß die Pulverpartikeln nach der Oxidation gegenüber dem oxidierenden Einfluß der Atmosphäre geschützt werden.

7. Verfahren nach Anspruch 6, dadurch gekennzeichnet, daß das Pulver unter Schutzgasatmosphäre oder Vakuum verpackt wird.

8. Verfahren nach Anspruch 6, dadurch gekennzeichnet, daß die Pulverpartikeln mit einem Schutzfilm versehen werden.

9. Verfahren nach Anspruch 8, dadurch gekennzeichnet, daß zur Bildung des Schutzfilms ein verseifbares Fett, Öl, Harz oder Wachs verwendet wird.

10. Verfahren nach Anspruch 8, dadurch gekennzeichnet, daß ein filmbildender Stoff wie Zelluloseaether, Polysaccharide oder wasserlösliche und/oder alkaliunbeständige Polymere zur Bildung des Schutzfilms verwendet werden.

11. Verfahren nach einem der Ansprüche 1 bis 10, dadurch gekennzeichnet, daß der porenbildende Stoff ein Silicid, insbesondere Ferrosilicium ist.

12. Verfahren zur Porenbildung in Mörtel durch Beimischung eines Pulvers eines durch chemische Reaktion mit einer anderen Mörtelkomponente gasbildenden, pulverförmigen Stoffs, dadurch gekennzeichnet, daß eine die Oberfläche der Pulverpartikeln inaktivierende Oxidschicht zuvor ganz oder teilweise beseitigt wird.

13. Verfahren nach Anspruch 12, dadurch gekennzeichnet, daß der Stoff mit Flußsäure behandelt wird.

14. Verfahren nach einem der Ansprüche 1 bis 11, dadurch gekennzeichnet, daß ihm das Verfahren gemäß Anspruch 12 oder 13 vorgeschaltet wird.

## Claims

1. A method for pore formation in mortar by admixing a powder of a powdery substance which is gas forming by chemical reaction with another mortar component and which comprises a metal or silicon, characterized in that, before mixing with the mortar, the powder particles are provided with an oxide layer temporarily inactivating them with respect to their reaction partner in the mortar.

2. A method according to Claim 1, characterised in that the gas-forming substance for forming the inactivating oxide layer is exposed to an oxidising agent.

3. A method according to Claim 2, characterised in that the concentration and/or exposure time of the oxidising agent is chosen in accordance with the desired inactivation time and the type of mortar.

4. A method according to Claim 1, characterised in that the powder is exposed to an oxygen-containing atmosphere at elevated temperature.

5. A method according to Claim 1 or 4, characterised in that the powder is exposed to an oxygen-containing atmosphere with oxygen activated by irradiation.

6. A method according to Claims 1 to 5, characterised in that, after the oxidation, the powder particles are protected from the oxidising influence of the atmosphere.

7. A method according to Claim 6, characterised in that the powder is packed under a protective atmosphere or vacuum.

8. A method according to Claim 6, characterised in that the powder particles are provided with a protective film.

9. A method according to Claim 8, characterised in that a saponifiable fat, oil, resin or wax is used to form the protective film.

10. A method according to Claim 8, characterised in that a film-forming substance, such as cellulose ether, polysaccharides or water-soluble and/or alkali-unstable polymers are used to form the protective film.

11. A method according to any one of Claims 1 to 10, characterised in that the pore-forming substance is a silicide, in particular ferrosilicon.

12. A method for pore formation in mortar by admixing a powder of a powdery substance which is gas forming by chemical reaction with another mortar component, characterised in that an oxide layer inactivating the surface of the powder particles is previously wholly or partly removed.

13. A method according to Claim 12, characterised in that the substance is treated with hydrofluoric acid.

14. A method according to any one of Claims 1 to 11, characterised in that it is preceded by the method according to Claim 12 or 13.

## Revendications

1. Procédé de formation de pores dans du mortier, par incorporation d'une poudre constituée d'une matière pulvérulente, produisant un dégagement gazeux par réaction chimique avec un autre composant du mortier, qui comprend un métal ou du silicium, caractérisé en ce que les particules de poudre sont enrobées, avant le mélange avec le mortier, d'une couche d'oxyde qui es rend temporairement inactives vis-à-vis de leur partenaire réactionnel présent dans le mortier.

2. Procédé selon la revendication 1, caractérisé en ce que, pour former la couche d'oxyde d'inactivation, la matière produisant un dégagement gazeux est soumise à l'action d'un agent oxydant.

3. Procédé selon la revendication 2, caractérisé en ce que la concentration et/ou la durée d'action de l'agent oxydant est choisie en fonction de la durée d'inactivation voulue et du type de mortier.

4. Procédé selon la revendication 1, caractérisé en ce que la poudre est soumise à l'action d'une atmosphère contenant de l'oxygène, à température élevée.

5. Procédé selon la revendication 1 ou 4, caractérisé en ce que la poudre est soumise à l'action d'une atmosphère comprenant de l'oxygène activé par irradiation.

6. Procédé selon l'une quelconque des revendications 1 à 5, caractérisé en ce que les particules de poudre sont protégées, après l'oxydation, vis-à-vis de l'action oxydante de l'atmosphère.

7. Procédé selon la revendication 6, caractérisé en ce que la poudre est conditionnée sous atmosphère de gaz protecteur ou sous vide.

8. Procédé selon la revendication 6, caractérisé en ce que les particules de poudre sont enrobées d'un film de protection.

9. Procédé selon la revendication 8, caractérisé en ce que pour former le film de protection, on utilise une graisse, une huile, une résine ou une cire saponifiable.

10. Procédé selon la revendication 8, caractérisé en ce que, pour former le film de protection, on utilise une matière filmogène telle qu'un éther de cellulose, un polysaccharide ou un polymère hydrosoluble et/ou résistant aux alcalis.

11. Procédé selon l'une quelconque des revendications 1 à 10, caractérisé en ce que la matière formatrice de pores est un siliciure, en particulier du ferrosilicium.

12. Procédé de formation de pores dans du mortier, par incorporation d'une poudre constituée d'une matière pulvérulente, produisant un dégagement gazeux par réaction chimique avec un autre composant du mortier, caractérisé en ce qu'une couche d'oxyde inactivant la surface des particules de poudre est, au préalable, partiellement ou totalement éliminée.

13. Procédé selon la revendication 12, caractérisé en ce que la matière est traitée avec de l'acide fluorhydrique.

14. Procédé selon l'une quelconque des revendications 1 à 11, caractérisé en ce qu'il est précédé par le procédé selon la revendication 12 ou 13.
